# EUROPEAN PATENT APPLICATION

(11) **EP 0 669 769 A1**
(43) Date of publication of application: **30.08.1995**
(21) Application number: 95300268.0
(22) Date of filing: 17.01.1995
(51) Int. Cl.: H04N 9/64

(54) **Color control system for multi-system television receiver**

(30) Priority: 25.02.1994 JP 27938/94
(71) Applicant: MATSUSHITA ELECTRIC INDUSTRIAL CO., LTD., Kadoma-shi, Osaka-fu, 571 (JP)
(72) Inventor: Tanaka, Emiko, Kawanishi-shi, Hyogo 666-01 (JP); Tanaka, Kohichi, Kawanishi-shi, Hyogo 666-01 (JP)
(74) Representative: Crawford, Andrew Birkby

(57) **Abstract**

Color control system for multi-system television receiver of the present invention comprising:
an image signal processing circuit,
a 50Hz/60Hz detecting circuit which detects the frequency of vertical sweep of the image signal is 50Hz or 60 Hz, and judges the image signal is NTSC system signal if the vertical sweep is 60 Hz,
said image signal processing circuit controls the color of the image signal when the image signal is judged as NTSC signal.

The color control system of the present invention realizes simple composition and low cost since it does not have conventional signal judging circuit.

## Description

### FIELD OF THE INVENTION

Present invention relates to a color control system used in multi-system television receiver.

### BACKGROUND OF THE INVENTION

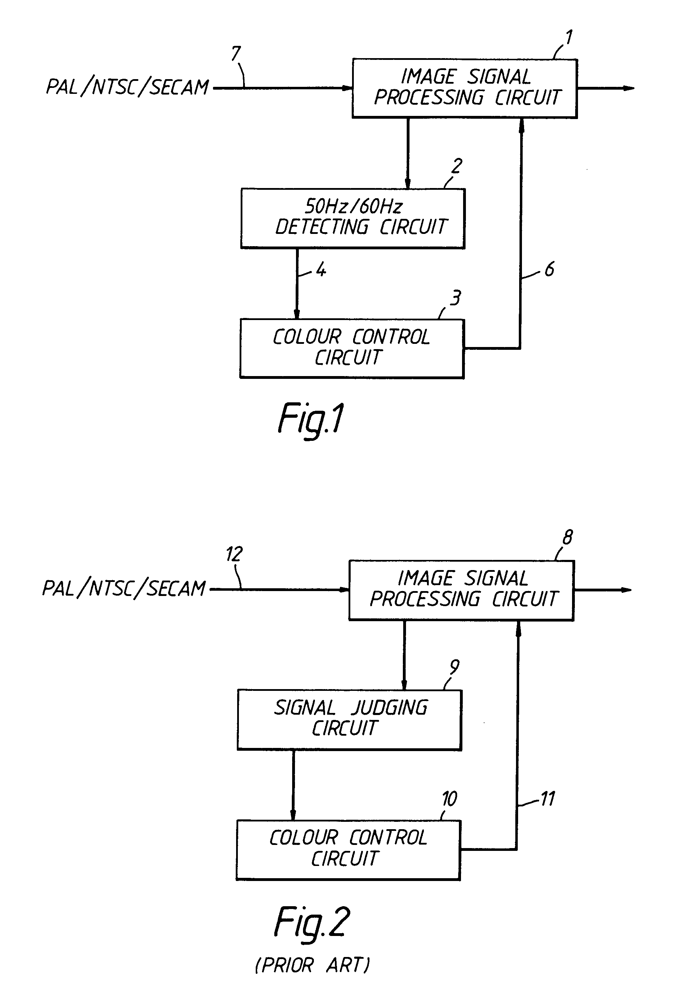

Fig.2 shows a block diagram of the conventional color control system for the multi-system television receiver. Image signal 12 which may belong to PAL or NTSC or SECAM system signal is input to an image signal processing circuit 8. Signal judging circuit 9 judges to which system the image signal belongs to. Color control circuit 10 outputs color control signal 11 only when the image signal 12 is judged as NTSC system signal. The image signal processing circuit 8 controls the color of the image signal 12 when received the color control signal 11.

### SUMMARY OF THE INVENTION

Color control system for the multi-system television receiver of the present invention comprising:
an image signal processing circuit which receives and processes an input image sinal,
a 50Hz/60Hz detecting circuit which judges the image signal as NTSC system signal when vertical sweep of the image signal is 60 Hz,

Said image signal processing circuit controls the color of the image signal only when the image signal is judged as NTSC system signal.

The color control system of the present invention realizes simple composition and low cost since it does not have conventional signal judging circuit.

### BRIEF DESCRIPTION OF THE DRAWINGS

Fig.1 shows a block diagram of the color control system for multi-system television receiver of the present invention.
Fig.2 shows a block diagram of conventional color control system for multi-system television receiver.

### EXEMPLARY EMBODIMENT

Fig.1 shows a block diagram of the color control system for multi-system television receiver of the present invention. Image signal 7 whi ch may belong to PAL or NTSC or SECAM system signal is input to an image signal processing circuit 1. 50Hz/60Hz detecting circuit 2 detects a frequency of a vertical sweep of the image signal 7 is 50Hz or 60Hz, and outputs a judging signal 4. The image signal is NTSC system signal if the vertical sweep is 60Hz. Color control circuit 3 outputs color control signal 6 only when the frequency of the vertical sweep of the image signal 7 is judged 60Hz. The image signal processing circuit 1 controls the color of the image signal 7 when received the color control signal 6. The color control system of the present invention realizes the simple composition and low cost since it does not have the conventional signal judging circuit.

## Claims

1. A color control system for the multi-system television reciver, comprising:
an image signal processing circuit which receives and processes the image signal,
50Hz/60Hz detecting circuit which judges a frequency of a vertical sweep of the image signal is 50Hz or 60Hz,
a color control circuit which outputs a color control signal when the frequency of the vertical sweep of the image signal is judged 60Hz,
said image signal processing circuit controls the color of the image signal when received the color control signal.
